# EUROPÄISCHE PATENTSCHRIFT

(11) **EP 3 983 659 B1**
(45) Veröffentlichungstag und Bekanntmachung des Hinweises auf die Patenterteilung: **30.11.2022**
(21) Anmeldenummer: 19733653.0
(22) Anmeldetag: 12.06.2019
(51) Int. Cl.: F01M 11/03, F16N 39/06, B04B 5/00, B04B 9/06, B04B 9/10, F01M 1/10

(54) **BRENNKRAFTMASCHINE**
INTERNAL COMBUSTION ENGINE
MOTEUR À COMBUSTION INTERNE

(43) Veröffentlichungstag der Anmeldung: 20.04.2022
(73) Patentinhaber: Innio Jenbacher GmbH & Co OG, 6200 Jenbach (AT)
(72) Erfinder: WALL, Günther, 6323 Bad Häring (AT); MADL, Wolfgang, 6094 Axams (AT); LAUBACH, Johannes, 6116 Weer (AT); FEYRSINGER, Peter, 6370 Kitzbühel (AT); STEINHARDT, Helmuth, 6020 Innsbruck (AT); MADERBÖCK, Manfred, 6200 Wiesing (AT)
(74) Vertreter: Torggler & Hofmann Patentanwälte - Innsbruck
(86) Internationale Anmeldenummer: PCT/AT2019/060193
(87) Internationale Veröffentlichungsnummer: WO 2020/247989

(56) Entgegenhaltungen:
- DE-A1-102015 211 103
- DE-A1-102017 000 427
- DE-A1-102017 006 348
- DE-U1- 29 609 980
- US-B2- 6 620 090

## Beschreibung

Die vorliegende Erfindung betrifft eine Brennkraftmaschine mit den Merkmalen des Oberbegriffs des Anspruchs 1.

Gattungsgemäße Brennkraftmaschinen umfassen
- zumindest eine Zentrifuge zum Separieren von Fremdstoffpartikeln aus einem Schmiermittel, wobei die zumindest eine Zentrifuge so ausgebildet ist, dass ein in die zumindest eine Zentrifuge hinein gerichteter Schmiermittelvolumenstrom eine Rotationsbewegung der zumindest einen Zentrifuge erzeugt und/oder aufrecht erhält,
- zumindest eine Zentrifugenpumpe zum Erzeugen und/oder Verstärken des in die zumindest eine Zentrifuge gerichteten Schmiermittelvolumenstroms sowie
- eine Steuer- oder Regelvorrichtung zum Steuern und/oder Regeln der zumindest einen Zentrifugenpumpe gemäß einem Soll-Wert für einen kinematischen Betriebsparameter und/oder für einen Einstellparameter der Zentrifugenpumpe.

Eine Brennkraftmaschine mit einer Ölzentrifuge ist beispielsweise aus der DE 10 2015 204 293 A1 bekannt.

Weitere aus dem Stand der Technik bekannte Ausführungsformen gehen aus der DE 10 2015 211 103 A1, der DE 10 2017 000 427 A1, der DE 10 2017 006 348 A1, der US 6 620 090 B2 und der DE 296 09 980 U1 hervor.

Zentrifugen sind besonders gut geeignet, Fremdpartikel im Schmiermittel abzuscheiden, die in großen Mengen im Schmiermittel vorliegen und zwar in Abhängigkeit des Dichteunterschiedes zwischen Medium und Partikel und unabhängig von der Größe der Fremdpartikel. In vielen Fällen werden Zentrifugen eingesetzt, welche durch den Druck im zu zentrifugierenden Schmiermittel (im in die Zentrifuge hinein gerichteten Schmiermittelvolumenstrom) angetrieben werden, bspw. durch den Rückstoß, den an tangentialen Auslassbohrungen am Zentrifugenrotor austretendes Medium verursacht. Bekannt ist es ebenso, die Zentrifuge eigengeschmiert auszuführen, d.h. das zu zentrifugierende Schmiermittel auch für die Schmierung des Zentrifugenrotors zu verwenden.

Bekannt sind außerdem Zentrifugen welche direkt extern angetrieben werden, bspw. mittels eines elektrischen Motors.

Insbesondere wenn dedizierte Zentrifugenpumpen zum Einsatz kommen, um den in die Zentrifuge hinein gerichteten Schmiermittelvolumenstrom zu erzeugen oder zu verstärken, tritt dabei das Problem auf, dass beispielsweise beim Abschalten der Zentrifugenpumpe plötzlich der Druck im zu zentrifugierenden Schmiermittel stark absinkt, weil die Zentrifugenpumpe nicht mehr angetrieben wird.

Dies hat auch zur Folge, dass die auf dem beschriebenen Prinzip der Eigenschmierung basierende Schmierung des Rotors der Zentrifuge nicht mehr ausreichend erfolgt.

Da diese Zentrifugen bei sehr hohen Drehzahlen betrieben werden, führt der plötzliche Wegfall der Schmierung zur Instabilität des Rotors und insbesondere zu Taumelbewegungen innerhalb des Gehäuses und starker Reibung an den Lagern von Rotor und Spindel. Als Resultat entstehen starke Vibrationen, die Beschädigungen der Zentrifuge oder zumindest stark erhöhten Verschleiß nach sich ziehen.

Aufgabe der Erfindung ist es daher, eine Brennkraftmaschine bereitzustellen, wobei Instabilitäten des Rotors der Zentrifuge während des Abschaltens der Zentrifugenpumpe vermieden oder zumindest verringert werden.

Diese Aufgabe wird mit den Merkmalen des Anspruchs 1 gelöst. Dies geschieht, indem die Steuer- oder Regelvorrichtung dazu ausgebildet ist, den Soll-Wert für die Steuerung und/oder Regelung der zumindest einen Zentrifugenpumpe bei einem Abschalten oder Starten der Zentrifugenpumpe graduell zu verändern.

Bevorzugt ist vorgesehen, dass das Abschalten oder Starten der Zentrifugenpumpe unabhängig vom Abschalten oder Starten der Brennkraftmaschine erfolgt.

Die Zentrifugenpumpe (welche Teil einer Ölreinigungsanlage ist) kann also ggf unabhängig vom Motorbetrieb betrieben werden. Die Ölreinigung erfolgt in der Regel, aber nicht ausschließlich, im Zuge des Betriebs der Brennkraftmaschine. Wird die Ölreinigungsanlage abgestellt, muss die Zentrifugenpumpe abschalten werden.

Unter Ausdrücken wie "Separieren von Fremdstoffpartikeln aus dem Schmiermittel" wird insbesondere das zumindest teilweise Abscheiden oder Filtern der Fremdstoffpartikel aus dem Schmiermittel heraus verstanden.

Darunter, dass der Schmiermittelvolumenstrom in die zumindest eine Zentrifuge hinein gerichtet ist, muss nicht notwendigerweise eine räumliche Ausrichtung des Schmiermittelvolumenstroms verstanden werden. Erfindungsgemäß ist aber festgelegt, dass der Schmiermittelvolumenstrom einerseits zum Erzeugen der Rotationsbewegung der zumindest einen Zentrifuge (insbesondere des Zentrifugenrotors) dient und andererseits das den Schmiermittelvolumenstrom bildende Schmiermittel durch die zumindest eine Zentrifuge eine Separierung von Fremdstoffpartikeln erfährt.

Zu separierende Fremdstoffpartikel können bspw. bei der Verbrennung oder durch ansonsten auftretende hohe Temperaturen entstandene Rußpartikel oder durch Verschleiß entstandene Metallpartikel sein.

Bei Soll-Werten für einen kinematischen Betriebsparameter und/oder für einen Einstellparameter der Zentrifugenpumpe kann es sich bevorzugt um eine Drehzahl eines Pumpenmotors handeln. Alternativ oder zusätzlich kann eine Pumpendrehfrequenz herangezogen werden. Ein Einstellparameter einer Verstellpumpekann beispielsweise ein Anstellwinkel sein.

Analog zum erfindungsgemäßen graduellen Verändern des Soll-Werts für die Steuerung oder Regelung der zumindest einen Zentrifugenpumpe beim Abschalten kann dies auch beim Starten der Zentrifugenpumpe vorgesehen sein. Dadurch können beispielsweise Druckspritzen vermieden werden, die entstehen, wenn die zumindest einen Zentrifugenpumpe schon mit voller Förderleistung betrieben wird, die entsprechende Rotationsgeschwindigkeit der zumindest einen Zentrifuge aber noch nicht erreicht ist.

Es ist darauf hinzuweisen, dass die zumindest eine Zentrifugenpumpe keine Zentrifugalpumpe sein muss. Der Ausdruck Zentrifugenpumpe deutet lediglich darauf hin, dass die zumindest eine Zentrifugenpumpe der zumindest einen Zentrifuge in dem Sinn zugeordnet ist, dass die zumindest eine Zentrifugenpumpe den Schmierstoffvolumenstrom zum Erzeugen und Beibehalten der Rotationsbewegung der zumindest einen Zentrifuge bereitstellt oder verstärkt.

Unter der erfindungsgemäßen graduellen Veränderung des Soll-Werts für die zumindest eine Zentrifugenpumpe kann verstanden werden, dass zumindest für einen gewissen Zeitraum ein Soll-Wert oder mehrere Soll-Werte gilt oder gelten, welche zwischen dem Soll-Wert bei Stillstand der Zentrifugenpumpe (wohl meist Null) und jenem während des normalen Betriebs der Zentrifugenpumpe liegen.

Anders formuliert, soll der Abschalt- oder Anfahrvorgang der zumindest einen Zentrifugenpumpe über einen gewissen Zeitraum erfolgen, um die beschriebenen negativen Effekte beim plötzlichen Start und Stopp der Zentrifugenpumpe zu vermeiden. Insbesondere kann der Zeitraum so gewählt werden, dass während des Abschaltens oder des Startens im Durchschnitt (über den Abschalt- oder Startvorgang) höchstens eine Zehntel Umdrehung pro Sekunde der Zentrifuge abgebaut oder aufgebaut wird. Bevorzugt werden höchstens eine Fünftel Umdrehung pro Sekunde und besonders bevorzugt höchstens eine Umdrehung pro Sekunde abgebaut oder aufgebaut.

Die graduelle Veränderung kann durch eine Steuerung oder Regelung der Zentrifugenpumpe gemäß einem vorgebaren oder dynamisch generierten zeitlichen Profil für die Soll-Werte erfolgen. Durch diesen graduellen Übergang zwischen Betriebszustand und Stillstand sollen die beschriebenen negativen Effekte eines plötzlichen Übergangs zwischen normalen Betrieb der zumindest einen Zentrifugenpumpe und Abschaltung derselben (sowie umgekehrt) zumindest teilweise vermieden werden.

Die zumindest eine Zentrifuge kann bevorzugt einen Rotor (Zentrifugenrotor), ein Gehäuse und einen Anschluss oder anderweitige Zufuhr für den Schmiermittelvolumenstrom des zu zentrifugierenden Schmiermittels aufweisen.

Als Schmiermittel kann bevorzugt Schmieröl als Hauptbestandteil zum Einsatz kommen, wobei verschiedene Zusätze vorhanden sein können, um die physikalischen und chemischen Eigenschaften des Schmieröls wie gewünscht zu beeinflussen.

Die Zentrifugenpumpe kann gleichzeitig mit der Brennkraftmaschine gestartet und/oder abgeschaltet werden. Alternativ oder zusätzlich kann die Zentrifugenpumpe auch gestartet oder abgeschaltet werden, wenn die Brennkraftmaschine nicht in Betrieb ist. Es wäre prinzipiell auch denkbar, die Zentrifugenpumpe während des Betriebs der Brennkraftmaschine abzuschalten und/oder zu starten.

Vorteilhafte Weiterbildungen der Erfindung sind in den abhängigen Ansprüchen definiert.

Es kann vorgesehen sein, dass die Steuer- oder Regelvorrichtung dazu ausgebildet ist, den Soll-Wert für die Steuerung und/oder Regelung der zumindest einen Zentrifugenpumpe bei einem Abschalten der Zentrifugenpumpe/Brennkraftmaschine graduell zu senken und/oder bei einem Start der Brennkraftmaschine graduell zu erhöhen.

Besonders bevorzugt kann es vorgesehen sein, dass die Steuer- oder Regelvorrichtung dazu ausgebildet ist, den Soll-Wert gemäß zumindest einer - vorzugsweise linearen - Rampe zu senken oder zu erhöhen. Dies ist besonders einfach zu implementieren. Nicht vollständig lineare Rampen sollen im Rahmen der Erfindung als Rampen gelten. Solche Abweichungen von rein linearen Rampen können beispielsweise durch zusammengesetzte Rampen mit verschiedener Steigung oder eine die Soll-Werte beeinflussende Vorsteuerung entstehen.

Alternativ zur Verwendung von Rampen für die graduelle Veränderung der Soll-Werte könnte beispielsweise auf ein Stufen-Profil oder ähnliches zurückgegriffen werden.

Es kann ein Pumpenmotor zum Antreiben der zumindest einen Zentrifugenpumpe vorgesehen sein, wobei der Soll-Wert bevorzugt eine Drehzahl des Pumpenmotors sein kann.

Es kann ein Frequenzumrichter für die Zentrifugenpumpe vorgesehen sein. Damit kann auf einfache Weise eine Steuerung oder Regelung einer Drehzahl oder Drehfrequenz des Pumpenmotors implementiert werden.

Die erfindungsgemäße Steuer- oder Regelvorrichtung kann in den Frequenzumrichter integriert sein oder durch eine zentrale Motorsteuerung realisiert sein. Letztere kann direkt an der Brennkraftmaschine oder über eine Datenfernübertragungsverbindung fern von der Brennkraftmaschine angeordnet sein.

Die zumindest eine Rampe kann bevorzugt eine Erhöhung oder Senkung der Drehfrequenz zwischen 0,1 Hz/s (Herz pro Sekunde) und 10 Hz/s, bevorzugt zwischen 0,25 Hz/s und 7 Hz/s und besonders bevorzugt zwischen 0,5 Hz/s und 3 Hz/s vorsehen. Besonders bevorzugt kann die Rampe eine Erhöhung oder Senkung der Drehfrequenz von 1 Hz/s vorsehen, wenn bspw. eine Drehfrequenz von 50 Hz während des Betriebs der Brennkraftmaschine vorliegt (und selbstverständlich 0 Hz im Stillstand). Bei anderen Drehfrequenzen während des Betriebs kann die Änderungsrate der Rampe entsprechend skaliert werden.

Im Rahmen der Steuerung oder Regelung der Zentrifugenpumpe nach dem Soll-Wert (insbesondere: Drehzahl des Pumpenmotors) kann eine Steuerung oder Regelung des Förderdrucks der zumindest einen Zentrifugenpumpe und/oder der Zentrifugendrehzahl überlagert sein.

Die zumindest eine Zentrifuge kann durch den in die zumindest eine Zentrifuge gerichteten Schmiermittelvolumenstrom eigengeschmiert sein. Hierfür kann bspw. ein kleiner Anteil des Schmiermittelvolumenstroms abgezweigt und statt für das Antreiben der zumindest einen Zentrifuge für die Schmierung eines Rotors der zumindest einen Zentrifuge verwendet werden. Dadurch kann sich eine hydrostatische oder eine hydrodynamische Schmierung des Zentrifugenrotors ergeben.

Die erfindungsgemäße graduelle, d.h. relativ langsame, Verstärkung oder Verminderung der Schmierung verhindert Instabilitäten des Rotors der zumindest einen Zentrifuge.

Bevorzugt kann eine Ansaugleitung der zumindest einen Zentrifugenpumpe mit zumindest einem der folgenden - vorzugsweise direkt - verbunden sein: Rückspülleitung eines Rückspülfilters, Ablauf eines zentralen Schmiermittelreservoirs, Schmiermittelrückleitung aus einem Ölnebelabscheider einer Kurbelgehäusebelüftung, Schmiermittelrückleitung aus einer Turboladerschmierung. Dabei kann die Ansaugleitung mit einer Leitung für abgeschiedenes Schmiermittel aus dem Ölnebelabscheider und/oder einer Rücklaufleitung aus der Turboladerschmierung - vorzugsweise direkt - verbunden sein.

Der Ölnebelabscheider ist als allgemeiner Schmiermittelabscheider zu verstehen, der aber in der Fachsprache als Ölnebelabscheider bezeichnet wird, auch wenn das Schmiermittel bspw. Zusätze aufweist oder nicht auf Öl basiert.

Die Effizienz der Abscheidung von Fremdstoffpartikeln aus dem Schmiermittel hängt bei Zentrifugen von verschiedenen Parametern ab. Dazu zählen die Menge der Fremdstoffpartikel im zu reinigenden Medium, die Dichte der Fremdstoffpartikel im Vergleich zur Dichte des Schmiermittels und die Rotationsgeschwindigkeit der zumindest einen Zentrifuge.

Die Zuführung von mit Fremdstoffpartikeln beladenem Schmierstoff zur zumindest einen Zentrifuge aus der Rückspülleitung eines Rückspülfilters, dem Ablauf eines zentralen Schmiermittelreservoirs, der Schmiermittelrückleitung aus dem Ölnebelabscheider einer Kurbelgehäusebelüftung und/oder der Schmiermittelrückleitung aus der Turboladerschmierung kann besonders vorteilhaft sein, weil rückgeführtes Schmiermittel aus diesen Quellen besonders hohe Belastungen mit Fremdstoffpartikel beinhalten und dadurch die Effizienz der Separation durch die zumindest eine Zentrifuge maximiert werden kann.

Insbesondere kann dabei die Ansaugleitung der zumindest einen Zentrifugenpumpe so mit der Rückspülleitung, der Schmiermittelrückleitung aus dem Ölnebelabscheider und/oder der Schmiermittelrückleitung aus der Turboladerschmierung verbunden sein, dass während des Betriebs der Brennkraftmaschine ein Hauptteil des in die zumindest eine Zentrifuge gerichteten Schmiermittelvolumenstroms aus der Rückspülleitung, dem Ölnebelabscheider und/oder der Turboladerschmierung stammt. Ein Hauptteil des Schmiermittels kann mehr 50 % - bevorzugt mehr als 75 % und besonders bevorzugt mehr als 90 % - gemessen am Gewicht und/oder am Volumen des Schmiermittels ausmachen. Ein Verlust des vorbeschriebenen Effekts durch Verdünnung der Fremdstoffpartikel bspw. in einer Ölwanne kann dadurch verhindert werden.

Besonders von Vorteil kann dabei im Rahmen der Erfindung sein, dass im Normalfall ein Betreiben der zumindest einen Zentrifuge mit Schmiermittel nur aus den genannten Quellen (Rückspülleitung eines Rückspülfilters, Ablauf eines zentralen Schmiermittelreservoirs, Schmiermittelrückleitung aus dem Ölnebelabscheider einer Kurbelgehäusebelüftung, Schmiermittelrückleitung aus der Turboladerschmierung) nicht funktionieren würde, da nicht genug Druck vorhanden wäre, was insbesondere durch eine dedizierte, von einer zentralen Schmiermittelpumpe gesonderte Zentrifugenpumpe gelöst werden kann. Durch die Erfindung kann also in der hier beschriebenen Ausführung die Effizienz der Separation von Fremdstoffpartikeln verbessert werden, ohne dass mehr oder aufwändigere Filter oder Zentrifugen eingesetzt werden müssen.

Im Rahmen der Erfindung können die zumindest eine Zentrifuge und die zumindest eine Zentrifugenpumpe aber auch aktiviert werden, wenn die Brennkraftmaschine nicht in Betrieb ist, d.h. das Schmiermittel kann gereinigt werden, während die Brennkraftmaschine steht. Dafür kann dann Schmiermittel aus einem zentralen Schmiermittelreservoir (Bsp. Ölwanne) verwendet werden.

Der Rückspülfilter kann ein Hauptfilter für Schmiermittel zum Schmieren von Maschinenelementen in einem Kurbelgehäuse der Brennkraftmaschine sein.

Es kann bevorzugt ein Schmiermittelkreislauf und eine zentrale Schmiermittelpumpe zum Fördern des Schmiermittels durch den Schmiermittelkreislauf vorgesehen sein, wobei die zentrale Schmiermittelpumpe vorzugsweise von der zumindest einen Zentrifugenpumpe gesondert ausgeführt ist. Durch Letzteres kann die zumindest eine Zentrifugenpumpe dediziert zum Bereitstellen oder Verstärken des in die zumindest eine Zentrifuge gerichteten Schmiermittelvolumenstroms zu Verfügung stehen (dedizierte Zentrifugenpumpe).

Die zumindest eine Zentrifugenpumpe kann eine Zahnradpumpe sein.

Parallel zur zumindest einen Zentrifuge - und vorzugsweise parallel zur Zentrifugenpumpe - geschaltet kann zumindest ein Filter vorgesehen sein, welcher bevorzugt auf die Abscheidung von Partikeln oberhalb einer gewissen Größe ausgelegt ist. Damit ergänzen sich der zumindest eine Filter und die zumindest eine Zentrifuge, welche Fremdstoffpartikel mehr aufgrund von Dichteunterschieden der Fremdstoffpartikel zum Schmiermittel separiert als aufgrund von Partikelgröße.

Bei der Brennkraftmaschine kann es sich um eine Hubkolbenmaschine mit einer beliebigen Anzahl von Zylinder handeln.

Die Brennkraftmaschine kann ein - vorzugsweise stationärer - Gasmotor sein, welcher bevorzugt zum Betreiben eines Gensets (also einer Kombination aus einem Generator zur Erzeugung elektrischer Energie und einer den Generator antreibenden stationären Brennkraftmaschine) vorgesehen sein kann.

Weitere Vorteile und Einzelheiten der Erfindung ergeben sich anhand der Figuren sowie der dazu gehörigen Figurenbeschreibung. Dabei zeigen:
- Fig. 1: eine erste Ausführungsform der Erfindung und
- Fig. 2: eine zweite Ausführungsform der Erfindung.

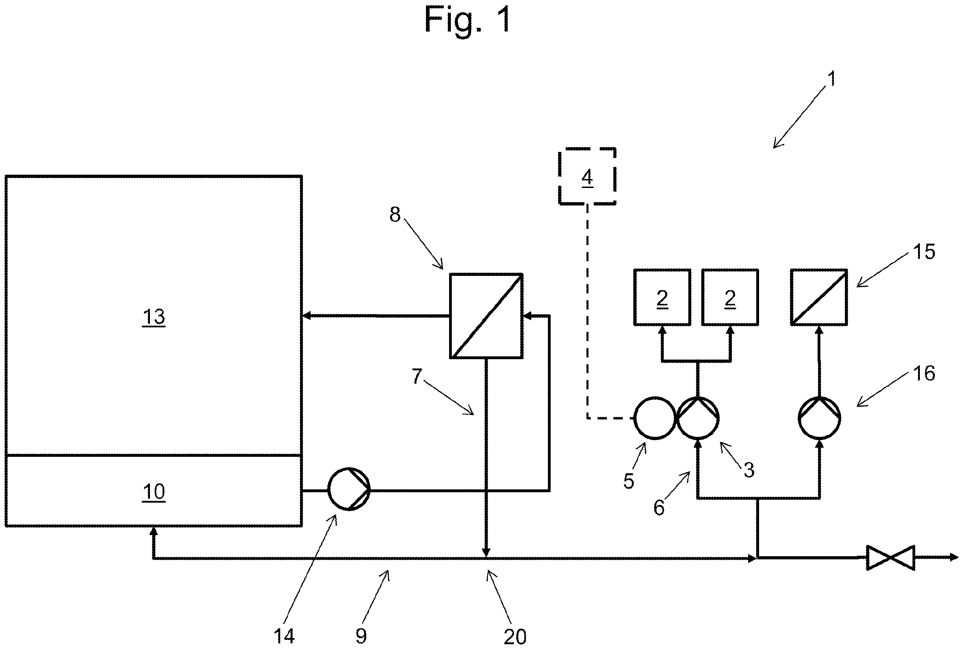

Fig. 1 stellt eine erfindungsgemäße Brennkraftmaschine 1 - in diesem Fall ein stationärer Gasmotor in Hubkolbenbauweise - schematisch dar.

Das Kurbelgehäuse 13 beinhaltet ein zentrales Schmiermittelreservoir 10 (Ölsumpf oder Ölwanne), wobei mittels einer zentralen Schmiermittelpumpe 14 Schmiermittel durch einen als Hauptfilter agierenden Rückspülfilter 8 gefördert wird, um mit dem so gefilterten Schmiermittel die Maschinenelemente innerhalb des Kurbelgehäuses 13, wie beispielsweise Kolben und Zylinder, Kurbeln und Kurbelwelle sowie deren Lager und Anlenkpunkte, zu schmieren.

Als weitere Vorrichtungen zum Erhalten oder Verbessern der Schmiermittelqualität sind einerseits zumindest eine Zentrifuge 2 und andererseits ein parallel geschalteter Filter 15 vorgesehen.

In diesem Ausführungsbeispiel sind zwei Zentrifugen 2 vorgesehen.

Die Zentrifugen 2 sind so ausgebildet, dass ein in die Zentrifugen 2 weisender Schmiermittelvolumenstrom zum Antreiben der Rotoren der Zentrifugen 2 dient.

Zum Bereitstellen dieses Schmiermittelvolumenstroms in die Zentrifuge 2 hinein ist eine dedizierte, d.h. von der zentralen Schmiermittelpumpe 14 separate, Zentrifugenpumpe 3 vorgesehen.

Zur Beschickung des Filters 15 ist ebenfalls eine separate Pumpe 16 vorgesehen.

Die Ansaugleitung 6 der Zentrifugenpumpe 3 ist im Ausführungsbeispiel nach Fig. 1 einerseits mit einer Rückspülleitung 7 des Rückspülfilters 8 und andererseits mit dem Ablauf 9 des zentralen Schmiermittelreservoirs 10 verbunden. Das geschieht über ein T-Stück 20, das die Ansaugleitung 6 mit der Rückspülleitung 7 und dem Ablauf 9 verbindet. Das T-Stück 20 verhindert einerseits eine Rückwirkung auf den Rückspülfilter 8 und ermöglicht andererseits bei Motorstillstand einen Betrieb der Zentrifuge 2 mit Öl aus dem Schmiermittelreservoir 10.

Durch direktes Verbinden der Rückspülleitung 7 mit der Ansaugleitung 6 wird verhindert, dass das mit relativ vielen Fremdstoffpartikeln beladene Schmiermittel aus dem Rückspülfilter 8 mit dem Schmiermittel im zentralen Schmiermittelreservoir 10 vermischt wird und dadurch die Fremdstoffpartikel in einer größeren Schmiermittelmenge verteilt werden. Dies ist vorteilhaft, weil eine größere Menge der Fremdstoffpartikel im zentrifugierten Schmiermittel die Effektivität der Abscheidung durch die Zentrifugen 2 erhöht.

Da der Druck im Schmiermittel aus dem Ablauf 9 und der Rückspülleitung 7 in der Regel nicht ausreichen würde, um die Zentrifugen 2 zu betreiben, ist die dedizierte Zentrifugenpumpe 3 vorgesehen.

Die Zentrifugenpumpe 3 wird durch den Pumpenmotor 5 angetrieben, der über einen Frequenzumrichter steuer- oder regelbar ist. Die Steuerung erfolgt über eine Steuer- oder Regelvorrichtung 4.

Ohne die erfindungsgemäße Steuerung oder Regelung der Zentrifugenpumpe 3 würde beim Abschalten der Brennkraftmaschine 1 plötzlich kein Schmiermittel mehr gefördert werden, wodurch der in die Zentrifugen 2 gerichtete Schmiermittelvolumenstrom ebenso plötzlich entfallen würde. Dies hätte eine instabile Rotation des Zentrifugenrotors zur Folge, was zur Beschädigung der Zentrifugen 2 oder zumindest zu stark erhöhtem Verschleiß und außerdem starker Geräuschentwicklung führen würde.

Erfindungsgemäß ist daher ein gesteuertes oder geregeltes graduelles Anlaufen und Abschalten der Zentrifugenpumpe 3 vorgesehen, um die Instabilitäten des Zentrifugenrotors beim Abschalten der Zentrifugenpumpe 3und Druckspitzen beim Starten der Zentrifugenpumpe 3 (wenn die Zentrifugenrotoren noch nicht oder noch zu langsam drehen) zu vermeiden.

Das durch die Zentrifuge 2 gereinigte Schmiermittel kann über eine nicht dargestellte Leitung bspw. dem Schmiermittelreservoir 10 zugeführt werden.

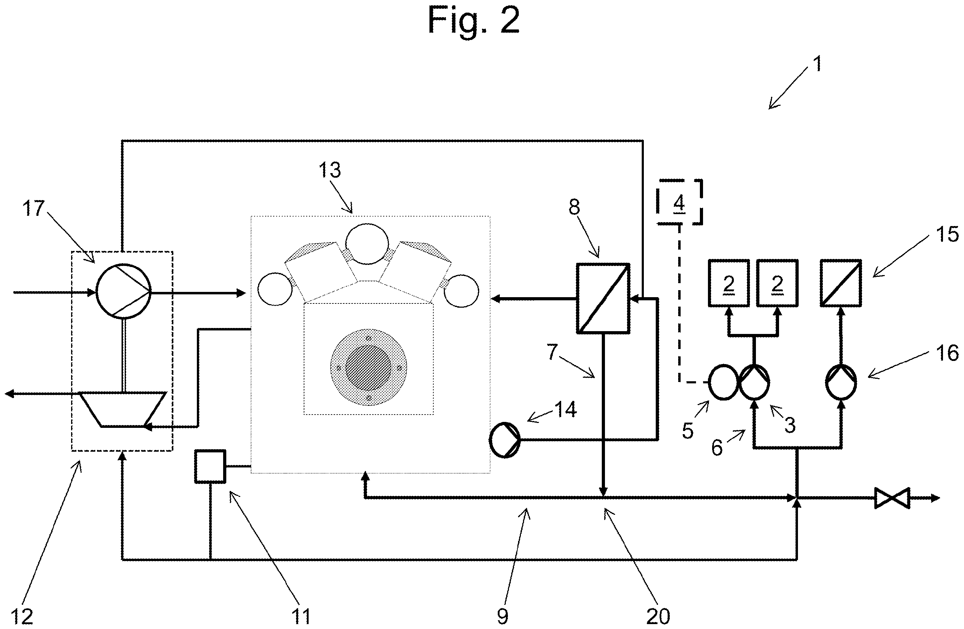

Die Ausführungsform nach Fig. 2 ist analog zu jener aus Fig. 1, wobei zusätzlich eine Turboladerschmierung 12 für einen Turbolader 17 und ein Ölnebelabscheider 11 für eine Kurbelgehäusebelüftung vorgesehen sind. Auch im Schmiermittel aus der Schmiermittelrückleitung aus der Turboladerschmierung 12 und aus der Schmiermittelrückleitung der Kurbelgehäusebelüftung ist zumeist eine hohe Konzentration an Partikeln vorzufinden. Diese Quellen sind daher auch gut geeignet, um der Abscheidung durch eine Zentrifuge 2 zugeführt zu werden, weshalb auch die Schmiermittelrückleitungen der Turboladerschmierung und der Ölnebelabscheider mit der Ansaugleitung 6 der Zentrifugenpumpe 3 verbunden sind.

Es ist zu bemerken, dass die Ausführungsformen in Bezug auf die Turboladerschmierung 12, den Ölnebelabscheider 11, den Ablauf 9 des zentralen Ölreservoirs 10 und den Rücklauf 7 des Rückspülfilters 8 frei kombiniert werden können.

### Bezugszeichenliste:

- 1: Brennkraftmaschine
- 2: Zentrifuge
- 3: Zentrifugenpumpe
- 4: Regelvorrichtung
- 5: Pumpenmotor
- 6: Ansaugleitung
- 7: Rücklauf
- 8: Rückspülfilters
- 9: Ablauf
- 10: Ölreservoirs
- 11: Ölnebelabscheider
- 12: Turboladerschmierung
- 13: Kurbelgehäuse
- 14: Schmiermittelpumpe
- 15: Filter
- 16: Pumpe
- 17: Turbolader
- 20: T-Stück

## Patentansprüche

1. Brennkraftmaschine mit
- zumindest einer Zentrifuge (2) zum Separieren von Fremdstoffpartikeln aus einem Schmiermittel, wobei die zumindest eine Zentrifuge (2) so ausgebildet ist, dass ein in die zumindest eine Zentrifuge (2) hinein gerichteter Schmiermittelvolumenstrom eine Rotationsbewegung der zumindest einen Zentrifuge (2) erzeugt und/oder aufrecht erhält,
- zumindest einer Zentrifugenpumpe (3) zum Erzeugen und/oder Verstärken des in die zumindest eine Zentrifuge (2) gerichteten Schmiermittelvolumenstroms sowie
- einer Steuer- oder Regelvorrichtung (4) zum Steuern und/oder Regeln der zumindest einen Zentrifugenpumpe (3) gemäß einem Soll-Wert für einen kinematischen Betriebsparameter und/oder für einen Einstellparameter der Zentrifugenpumpe (3),
**dadurch gekennzeichnet, dass** die Steuer- oder Regelvorrichtung (4) dazu ausgebildet ist, den Soll-Wert für die Steuerung und/oder Regelung der zumindest einen Zentrifugenpumpe (3) bei einem Abschalten oder Starten der Zentrifugenpumpe (3) graduell zu verändern.

2. Brennkraftmaschine nach Anspruch 1, **dadurch gekennzeichnet, dass** die Steueroder Regelvorrichtung (4) dazu ausgebildet ist, den Soll-Wert für die Steuerung und/oder Regelung der zumindest einen Zentrifugenpumpe (3) bei einem Abschalten der Zentrifugenpumpe (3) graduell zu senken und/oder bei einem Start der Zentrifugenpumpe (3) graduell zu erhöhen.

3. Brennkraftmaschine nach Anspruch 1 oder 2, **dadurch gekennzeichnet, dass** die Steuer- oder Regelvorrichtung (4) dazu ausgebildet ist, den Soll-Wert gemäß zumindest einer - vorzugsweise linearen - Rampe zu senken oder zu erhöhen.

4. Brennkraftmaschine nach einem der vorhergehenden Ansprüche, **dadurch gekennzeichnet, dass** ein Pumpenmotor (4) zum Antreiben der zumindest einen Zentrifugenpumpe (3) vorgesehen ist, wobei der Soll-Wert eine Drehzahl des Pumpenmotors (4) ist.

5. Brennkraftmaschine nach Anspruch 4, **dadurch gekennzeichnet, dass** ein Frequenzumrichter für den Pumpenmotor (5) vorgesehen ist.

6. Brennkraftmaschine nach einem der Ansprüche 3 bis 5, **dadurch gekennzeichnet, dass** die zumindest eine Rampe eine Erhöhung oder Senkung der Drehfrequenz zwischen 0,1 Hz/s und 10 Hz/s, bevorzugt zwischen 0,25 Hz/s und 7 Hz/s und besonders bevorzugt zwischen 0,5 Hz/s und 3 Hz/s vorsieht.

7. Brennkraftmaschine nach einem der vorhergehenden Ansprüche, **dadurch gekennzeichnet, dass** bei der Steuerung oder Regelung der zumindest einen Zentrifugenpumpe (3) nach dem Soll-Wert eine Steuerung oder Regelung des Förderdrucks der zumindest einen Zentrifugenpumpe (3) und/oder der Zentrifugendrehzahl überlagert ist.

8. Brennkraftmaschine nach einem der vorhergehenden Ansprüche, **dadurch gekennzeichnet, dass** die zumindest eine Zentrifuge (2) durch den in die zumindest eine Zentrifuge (2) gerichteten Schmiermittelvolumenstrom eigengeschmiert ist.

9. Brennkraftmaschine nach einem der vorhergehenden Ansprüche, **dadurch gekennzeichnet, dass** eine Ansaugleitung (6) der zumindest einen Zentrifugenpumpe (3) mit zumindest einem der folgenden - vorzugsweise direkt - verbunden ist: Rückspülleitung (7) eines Rückspülfilters (8), Ablauf (9) eines zentralen Schmiermittelreservoirs (10), Schmiermittelrückleitung aus einem Ölnebelabscheider (11) einer Kurbelgehäusebelüftung, Schmierittelrückleitung aus einer Turboladerschmierung (12).

10. Brennkraftmaschine nach Anspruch 9, **dadurch gekennzeichnet, dass** die Ansaugleitung (6) der zumindest einen Zentrifugenpumpe (3) so mit der Rückspülleitung (7), der Schmiermittelrückleitung aus dem Ölnebelabscheider (11) und/oder der Schmiermittelrückleitung aus der Turboladerschmierung (12) verbunden ist, dass während des Betriebs der Brennkraftmaschine (1) ein Hauptteil des in die zumindest eine Zentrifuge (2) gerichteten Schmiermittelvolumenstroms aus der Rückspülleitung (7), dem Ölnebelabscheider (11) und/oder der Turboladerschmierung (12) stammt.

11. Brennkraftmaschine nach einem der Ansprüche 9 oder 10, **dadurch gekennzeichnet, dass** der Rückspülfilter (8) ein Hauptfilter für Schmiermittel zum Schmieren von Maschinenelementen in einem Kurbelgehäuse (13) der Brennkraftmaschine (1) ist.

12. Brennkraftmaschine nach einem der vorhergehenden Ansprüche, **dadurch gekennzeichnet, dass** zumindest ein parallel zur zumindest einen Zentrifuge (2) - und vorzugsweise parallel zur Zentrifugenpumpe (3) - geschalteter Filter (15) vorgesehen ist.

13. Brennkraftmaschine nach einem der vorhergehenden Ansprüche, **dadurch gekennzeichnet, dass** die Brennkraftmaschine (1) eine Hubkolbenmaschine ist.

## Claims

1. Internal combustion engine with
- at least one centrifuge (2) for separating foreign particles from a lubricant, wherein the at least one centrifuge (2) is designed such that a volumetric flow of lubricant directed into the at least one centrifuge (2) generates and/or maintains a rotational movement of the at least one centrifuge (2),
- at least one centrifugal pump (3) for generating and/or strengthening the volumetric flow of lubricant directed into the at least one centrifuge (2) as well as
- an open-loop or closed-loop control device (4) for the open-loop and/or closed-loop control of the at least one centrifugal pump (3) according to a set value for a kinematic operating parameter and/or for a setting parameter of the centrifugal pump (3),
**characterized in that** the open-loop or closed-loop control device (4) is designed to gradually change the set value for the open-loop and/or closed-loop control of the at least one centrifugal pump (3) when the centrifugal pump (3) is switched off or started.

2. Internal combustion engine according to claim 1, **characterized in that** the open-loop or closed-loop control device (4) is designed to gradually decrease the set value for the open-loop and/or closed-loop control of the at least one centrifugal pump (3) when the centrifugal pump (3) is switched off and/or gradually increase it when the centrifugal pump (3) is started.

3. Internal combustion engine according to claim 1 or 2, **characterized in that** the open-loop or closed-loop control device (4) is designed to decrease or increase the set value according to at least one - preferably linear - ramp.

4. Internal combustion engine according to one of the preceding claims, **characterized in that** a pump motor (5) is provided to drive the at least one centrifugal pump (3), wherein the set value is a rotation speed of the pump motor (5).

5. Internal combustion engine according to claim 4, **characterized in that** a frequency converter is provided for the pump motor (5).

6. Internal combustion engine according to one of claims 3 to 5, **characterized in that** the at least one ramp provides an increase or decrease in the rotation frequency between 0.1 Hz/s and 10 Hz/s, preferably between 0.25 Hz/s and 7 Hz/s and particularly preferably between 0.5 Hz/s and 3 Hz/s.

7. Internal combustion engine according to one of the preceding claims, **characterized in that**, during the open-loop or closed-loop control of the at least one centrifugal pump (3) according to the set value, an open-loop or closed-loop control of the pump pressure of the at least one centrifugal pump (3) and/or the rotation speed of the centrifuge is superimposed.

8. Internal combustion engine according to one of the preceding claims, **characterized in that** the at least one centrifuge (2) is self-lubricated by the volumetric flow of lubricant directed into the at least one centrifuge (2).

9. Internal combustion engine according to one of the preceding claims, **characterized in that** an intake pipe (6) of the at least one centrifugal pump (3) is connected - preferably directly - to at least one of the following: reversible flow pipe (7) of a reversible flow filter (8), outlet (9) of a central lubricant reservoir (10), lubricant return pipe from an oil mist separator (11) of a crankcase ventilation, lubricant return pipe from a turbocharger lubrication system (12) .

10. Internal combustion engine according to claim 9, **characterized in that** the intake pipe (6) of the at least one centrifugal pump (3) is connected to the reversible flow pipe (7), the lubricant return pipe from the oil mist separator (11) and/or the lubricant return pipe from the turbocharger lubrication system (12) such that during the operation of the internal combustion engine (1) a major portion of the volumetric flow of lubricant directed into the at least one centrifuge (2) comes from the reversible flow pipe (7), the oil mist separator (11) and/or the turbocharger lubrication system (12).

11. Internal combustion engine according to one of claims 9 or 10, **characterized in that** the reversible flow filter (8) is a main filter for lubricant for lubricating machine elements in a crankcase (13) of the internal combustion engine (1).

12. Internal combustion engine according to one of the preceding claims, **characterized in that** at least one filter (15) connected parallel to the at least one centrifuge (2) - and preferably connected parallel to the centrifugal pump (3) - is provided.

13. Internal combustion engine according to one of the preceding claims, **characterized in that** the internal combustion engine (1) is a reciprocating internal combustion engine.

## Revendications

1. Moteur à combustion interne avec
- au moins une centrifugeuse (2) pour la séparation de particules de substances étrangères d'un lubrifiant, dans lequel l'au moins une centrifugeuse (2) est réalisée de sorte qu'un flux volumique de lubrifiant dirigé dans l'au moins une centrifugeuse (2) génère et/ou maintienne un mouvement de rotation de l'au moins une centrifugeuse (2),
- au moins une pompe centrifuge (3) pour la génération et/ou le renforcement du flux volumique de lubrifiant dirigé dans l'au moins une centrifugeuse (2) ainsi que
- un dispositif de commande ou de régulation (4) pour la commande et/ou la régulation de l'au moins une pompe centrifuge (3) selon une valeur de consigne pour un paramètre de fonctionnement cinématique et/ou pour un paramètre de réglage de la pompe centrifuge (3),
**caractérisé en ce que** le dispositif de commande ou de régulation (4) est réalisé afin de modifier progressivement la valeur de consigne pour la commande et/ou la régulation de l'au moins une pompe centrifuge (3) lors d'une mise hors tension ou d'un démarrage de la pompe centrifuge (3).

2. Moteur à combustion interne selon la revendication 1, **caractérisé en ce que** le dispositif de commande ou de régulation (4) est réalisé afin d'abaisser progressivement la valeur de consigne pour la commande et/ou la régulation de l'au moins une pompe centrifuge (3) lors d'une mise hors tension de la pompe centrifuge (3) et/ou de l'augmenter progressivement lors d'un démarrage de la pompe centrifuge (3).

3. Moteur à combustion interne selon la revendication 1 ou 2, **caractérisé en ce que** le dispositif de commande ou de régulation (4) est réalisé afin d'abaisser ou d'augmenter la valeur de consigne selon au moins une rampe, de préférence linéaire.

4. Moteur à combustion interne selon l'une quelconque des revendications précédentes, **caractérisé en ce qu'**un moteur de pompe (5) est prévu pour l'entraînement de l'au moins une pompe centrifuge (3), dans lequel la valeur de consigne est une vitesse de rotation du moteur de pompe (5).

5. Moteur à combustion interne selon la revendication 4, **caractérisé en ce qu'**un convertisseur de fréquence est prévu pour le moteur de pompe (5).

6. Moteur à combustion interne selon l'une quelconque des revendications 3 à 5, **caractérisé en ce que** l'au moins une rampe prévoit une augmentation ou un abaissement de la fréquence de rotation entre 0,1 Hz/s et 10 Hz/s, de préférence entre 0,25 Hz/s et 7 Hz/s et de manière particulièrement préférée entre 0,5 Hz/s et 3 Hz/s.

7. Moteur à combustion interne selon l'une quelconque des revendications précédentes, **caractérisé en ce qu'**une commande ou régulation de la pression de refoulement de l'au moins une pompe centrifuge (3) et/ou de la vitesse de rotation de centrifugeuse est superposée lors de la commande ou la régulation de l'au moins une pompe centrifuge (3) selon la valeur de consigne.

8. Moteur à combustion interne selon l'une quelconque des revendications précédentes, **caractérisé en ce que** l'au moins une centrifugeuse (2) est autolubrifiée par le flux volumique de lubrifiant dirigé dans l'au moins une centrifugeuse (2).

9. Moteur à combustion interne selon l'une quelconque des revendications précédentes, **caractérisé en ce qu'**une conduite d'aspiration (6) de l'au moins une pompe centrifuge (3) est reliée à au moins un des éléments suivants, de préférence directement : conduite de rétrolavage (7) d'un filtre de rétrolavage (8), orifice de sortie (9) d'un réservoir de lubrifiant (10) central, conduite de retour de lubrifiant depuis un séparateur de vapeur d'huile (11) d'une ventilation de carter de vilebrequin, conduite de retour de lubrifiant d'une lubrification de turbocompresseur à suralimentation (12).

10. Moteur à combustion interne selon la revendication 9, **caractérisé en ce que** la conduite d'aspiration (6) de l'au moins une pompe centrifuge (3) est reliée à la conduite de rétrolavage (7), la conduite de retour de lubrifiant du séparateur de vapeur d'huile (11) et/ou la conduite de retour de lubrifiant de la lubrification de turbocompresseur à suralimentation (12), que pendant le fonctionnement du moteur à combustion interne (1), une partie principale du flux volumique de lubrifiant dirigé dans l'au moins une centrifugeuse (2) provient de la conduite de rétrolavage (7), du séparateur de vapeur d'huile (11) et/ou de la lubrification de turbocompresseur à suralimentation (12).

11. Moteur à combustion interne selon l'une quelconque des revendications 9 ou 10, **caractérisé en ce que** le filtre de rétrolavage (8) est un filtre principal pour des lubrifiants pour la lubrification d'éléments de machine dans un carter de vilebrequin (13) du moteur à combustion interne (1).

12. Moteur à combustion interne selon l'une quelconque des revendications précédentes, **caractérisé en ce qu'**au moins un filtre (15) monté parallèlement à au moins une centrifugeuse (2), et de préférence parallèlement à la pompe centrifuge (3) est prévu.

13. Moteur à combustion interne selon l'une quelconque des revendications précédentes, **caractérisé en ce que** le moteur à combustion interne (1) est un moteur à pistons alternatifs.
